# EUROPEAN PATENT APPLICATION

(11) **EP 3 879 140 A1**
(43) Date of publication of application: **15.09.2021**
(21) Application number: 20020257.0
(22) Date of filing: 01.06.2020
(51) Int. Cl.: F16J 15/00, B63H 23/34, F16J 15/34

(54) **STERN TUBE SEAL**

(30) Priority: 31.05.2019 GB 201907810
(71) Applicant: AES Engineering Ltd, Bradmarsh Business Park Rotherham S60 1BZ (GB)
(72) Inventor: LEWIS, John, Rotherham, S60 1BZ (GB); BANKS, Joshua, Rotherham, S60 1BZ (GB); SHARRATT, Ben, Rotherham, S60 1BZ (GB)
(74) Representative: Harrison, Michael Robert

(57) **Abstract**

A stern tube seal device comprises two back-to-back sealing faces (4,5,6) that create a void 915) between lubricating fluid and water. The sealing faces are made up of stationary faces (4,6) and a rotary face unit 95). The rotary face unit is positively driven by a shaft liner (9). The rotary face unit and at least one stationary face is resiliently mounted and can move independently of the shaft liner.

## Description

### Field of the Invention

This invention relates to a multi barrier rotating stern tube sealing device that seals the stern tube lubricating fluid from the surrounding seawater or fresh water.

### Background of the Invention

A stern tube seal seals a propeller shaft with respect to the ship's stern structure. Some existing seals included multiple lip seal arrangements. Such seals are known to cause wear to the propeller shaft liner.

### Statement of Invention

The present invention is directed to a device comprising of two back-to-back radially divided or split sealing faces that create a void between the lubricating fluid and water in a stern tube seal. The sealing face arrangement is enclosed in a radially divided or split seal casing. Said radially divided or split sealing faces and seal casing allow for in situ service and repair procedures.

The back-to-back sealing face arrangement comprises of two stationary sealing face units and one main rotary sealing face assembly. Said stationary sealing face units are unitised to stationary seal casing components by means of anti-rotation features and annular sealing members. Said rotary sealing face assembly comprises of one inboard rotary face unit and one outboard rotary face unit that is unitised to said inboard rotary face unit by means of anti-rotation elements and annual sealing elements.

The rotary sealing face assembly is driven by means of a shaft liner component that is mechanically fixed to the vessel's propeller. Said rotary sealing face assembly is positively driven by the shaft liner component by means of profiled drive features on both the rotary seal face unit and shaft liner components that unitise said components.

The inboard stationary seal face unit and rotary sealing face unit are resiliently mounted and can move independently of the shaft liner and in turn are unaffected by a set amount of misalignment from the stern shaft and have a self-aligning function that ensures complete seal face contact for all sealing face elements.

Seal face pressure is created by both a series of spring energizer elements and the pressure of the stern tube lubrication. Said means of pressure are applied to the inboard stationary seal face unit. The inboard stationary seal is positively contiguous to the rotary sealing face unit through said pressure applied to the inboard seal face unit, said rotary seal face unit is positively contiguous to the outboard sealing face unit through said pressure applied to the rotary seal face unit.

The split seal case includes ports that are positioned to access the aforementioned void between the back-to-back sealing faces. Said void and ports allow for a vent and drain or barrier fluid system.

### Brief Description of the Drawings

The accompanying drawings are as follow;
**Figure 1** is a cross sectional view of the first embodiment of a stern tube mechanical seal in accordance with the present invention;
**Figure 2** is an alternative cross sectional view of the first embodiment of a stern tube seal in accordance with the present invention showing more specifically the spring energiser elements and stationary sealing face fixation elements and rotary sealing face driving elements;
**Figure 3** is an embodiment of the profiled drive features of the shaft liner and rotary seal face units;

### Detailed Description of the Invention

The invention will now be described, by way of example only, with reference to the accompanying drawings.

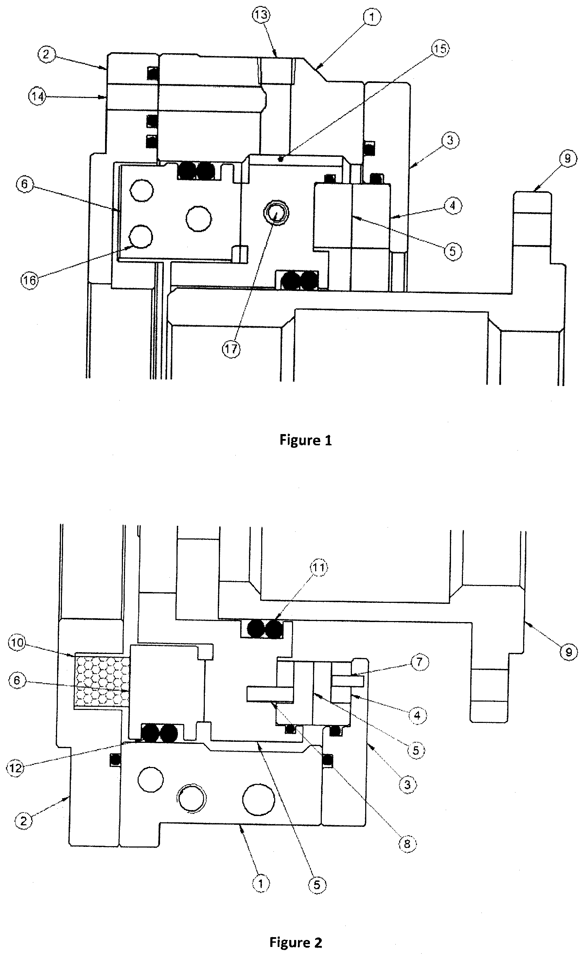

Referring to **Figure 1** of the accompanying drawings, there is shown a cross sectional view of a stern seal. The stern tube seal consists of a radially divided or split seal casing 1, a spring plate 2, an outboard stationary holder 3, radially divided or split rotary faces 5, an outboard stationary radially divided or split face 4, an inboard stationary radially divided or split face 6. Typically a shaft would be located within shaft liner 9 and spring plate 2 would be fixed to a stern tube end. The back-to-back sealing arrangement creates a sealed void 15 that is accessed through ports 13 and 14 to allow for vent and drain as well as barrier fluid setup options.

Referring to **Figure 2** of the accompanying drawings, there is shown a cross sectional view of a stern seal. The stern seal consists of spring element/s 10, stationary anti-rotation feature/s 7, and rotary drive feature/s 8 and sealing member/s 11 and 12. Stationary sealing face 6, rotary sealing faces 5 and stationary sealing face 4 are split and all are unitised as singular annular sealing units using mechanical fixations such as bolts 16 and 17.

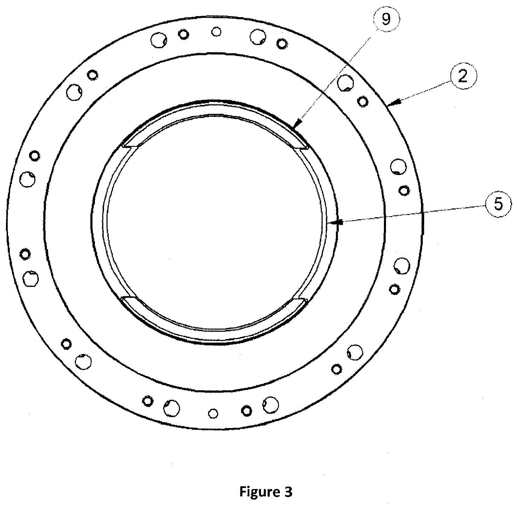

Referring to **Figure 3** of the accompanying drawings, there is shown an embodiment of a shaft liner drive feature profile 9 and a mating rotary seal unit drive feature profile 5. Shaft liner drive feature 9 mates with the rotary seal unit drive feature 5 to provide positive rotary drive of the rotary seal unit.

## Claims

1. A device comprising two back-to-back sealing faces that create a void between lubricating fluid and water, the sealing faces being made up of stationary faces and a rotary face unit, the rotary face unit being positively driven by a shaft liner, and the rotary face unit and at least 1 stationary face being resiliently mounted and movable independently of the shaft liner.

2. A device according to claim 1, wherein the sealing face arrangement is self-aligning.

3. A device according to claim 1, wherein spring energiser elements are used to generate a predetermined seal face pressure.

4. A device according to claim 1, wherein the rotary face unit is positively driven by a shaft liner by means of profiled drive features on both the rotary seal face unit and shaft liner.

5. A device according to claim 1, wherein said back-to-back sealing arrangement comprises of radially divided sealing faces.

6. A device according to claim 1, wherein said back-to-back sealing arrangement is enclosed in a split seal casing.

7. A device according to claim 1, wherein said void is sealed and accessed through ports allowing for vent and drain as well as barrier fluid set ups.

8. A device according to claim 3, wherein stern tube lubrication creates sealing face pressure alongside the spring energiser elements.

9. A device according to any of the preceding claims, wherein the device is a stern tube seal.
